(19) Europäisches Patentamt
European Patent Office
Office européen des brevets

(11) **EP 2 865 093 B1**

(12) **EUROPÄISCHE PATENTSCHRIFT**

(45) Veröffentlichungstag und Bekanntmachung des Hinweises auf die Patenterteilung:
**08.06.2016 Patentblatt 2016/23**

(21) Anmeldenummer: **13717961.0**

(22) Anmeldetag: **23.04.2013**

(51) Int Cl.:
*H02M 7/5387* (2007.01)   *H02P 21/06* (2006.01)
*H02M 1/00* (2006.01)   *H02M 1/32* (2007.01)
*H02M 7/48* (2007.01)

(86) Internationale Anmeldenummer:
**PCT/EP2013/058410**

(87) Internationale Veröffentlichungsnummer:
**WO 2013/189632 (27.12.2013 Gazette 2013/52)**

(54) **VERFAHREN UND VORRICHTUNG ZUM ANSTEUERN EINES WECHSELRICHTERS**

METHOD AND DEVICE FOR CONTROLLING AN INVERTER

PROCÉDÉ ET DISPOSITIF DE COMMANDE D'UN ONDULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2012 DE 102012210648**

(43) Veröffentlichungstag der Anmeldung:
**29.04.2015 Patentblatt 2015/18**

(73) Patentinhaber: **Robert Bosch GmbH**
**70442 Stuttgart (DE)**

(72) Erfinder:
• **DEFLORIO, Andrea**
**71672 Marbach am Neckar (DE)**
• **MERKEL, Tino**
**71701 Schwieberdingen (DE)**
• **SCHUSTER, Ulrich**
**70180 Stuttgart (DE)**
• **HIRSCH, Michele**
**73730 Esslingen (DE)**

(56) Entgegenhaltungen:
DE-A1-102008 040 144    DE-T5- 10 393 516
US-A- 5 631 819

**Beschreibung**

Die vorliegende Erfindung betrifft ein Verfahren zum Ansteuern eines Wechselrichters mittels Raumzeigermodulation, insbesondere zum Ansteuern einer elektrischen Maschine, wobei der Wechselrichter eine Mehrzahl von steuerbaren Schaltern aufweist und dazu ausgebildet ist, einen mehrphasigen elektrischen Strom bereitzustellen, insbesondere, um eine elektrische Maschine mehrphasig mit elektrischem Strom zu versorgen, wobei ein Referenzphasenwinkel vorgegeben wird, wobei der Wechselrichter derart angesteuert wird, dass eine Mehrzahl von unterschiedlichen aufeinanderfolgenden Schaltzuständen der Schalter eingerichtet wird, um den elektrischen Strom in Form eines Stromraumzeigers bereitzustellen.

Die vorliegende Erfindung betrifft ferner eine Vorrichtung zum Ansteuern eines Wechselrichters, insbesondere zum Ansteuern einer elektrischen Maschine, wobei der Wechselrichter eine Mehrzahl von ansteuerbaren Schaltern aufweist, die dazu angeschlossen sind, einen mehrphasigen elektrischen Strom in Abhängigkeit eines Referenzphasenwinkels bereitzustellen, insbesondere, um die elektrische Maschine mehrphasig zu bestromen, mit einem Steuergerät, das dazu ausgebildet ist, den Wechselrichter derart anzusteuern, dass der Wechselrichter eine Mehrzahl von aufeinanderfolgenden unterschiedlichen Schaltzuständen der Schalter annimmt, um den Strom in Form eines Stromraumzeigers bereitzustellen.

Die vorliegende Erfindung betrifft ferner einen Kraftfahrzeugantriebsstrang mit wenigstens einer elektrischen Maschine zum Bereitstellen von Antriebsleistung, einem Wechselrichter zum Ansteuern der elektrischen Maschine, und mit einer Vorrichtung zum Ansteuern des Wechselrichters der oben beschriebenen Art.

Stand der Technik

Auf dem technischen Gebiet der Drehstromverbraucher im Allgemeinen und der elektrischen Drehstrommaschinen im Speziellen sind unterschiedliche Ansteuerungsverfahren bekannt. Dabei wird aktuell üblicherweise das Verfahren der Raumzeigermodulation zur Ansteuerung des Drehstromverbrauchers bevorzugt. Bei diesem Ansteuerungsverfahren wird ein Raumzeiger durch aufeinander folgende Einstellung von acht Grundspannungszeigern gebildet. Um die Strangspannung bereitzustellen, werden die Grundspannungszeiger pulsweitenmoduliert geschaltet, sodass eine entsprechende Ansteuerspannung generiert wird.

Bei den bekannten Ansteuerungsverfahren werden die elektrischen Verbraucher mittels eines Wechselrichters mit Leistungshalbleiterschaltern angesteuert. Die Einstellung der acht aufeinander folgenden Grundspannungszeiger zur Erzeugung des Spannungsraumzeigers wird durch abwechselndes Ein- und Ausschalten bestimmter Leistungshalbleiterschalter der Wechselrichter realisiert. Bei sehr geringen Rotationsgeschwindigkeiten des Raumzeigers beziehungsweise, sofern der Drehstromverbraucher eine elektrische Maschine ist, bei geringen Drehzahlen der angesteuerten elektrischen Maschinen werden einzelne der Leistungshalbleiterschalter sehr häufig bzw. sehr lange geschaltet und somit durch einen sehr lange bzw. sehr häufig fließenden elektrischen Strom thermisch belastet. Daher müssen die Leistungshalbleiterschalter für sehr lange Einschlatzeiten und für sehr große Ströme ausgelegt werden, wodurch der Wechselrichter im Allgemeinen technisch aufwändig wird.

Um einer, insbesondere thermischen, Überbelastung der Leistungshalbleiterschalter zu begegnen wird beispielsweise in der WO 2010/000548A2 vorgeschlagen, einen von zwei spannungsfrei schaltenden Schaltzuständen in bestimmten Pulsweitenmodulationsperioden entfallen zu lassen, um die Schaltverluste der Leistungshalbleiterschalter zu verringern.

Da die, insbesondere thermische, Belastung einzelner Leistungshalbleiterschalter des Wechselrichters abhängig von einem Phasenwinkel des bereitgestellten Stromraumzeigers ist bzw. einzelne der Leistungshalbleiterschalter des Wechselrichters für bestimmte Phasenwinkel des bereitgestellten Stromraumzeigers unterschiedlich belastet werden, wird beispielsweise in der DE 10393516 T1 vorgeschlagen, in bestimmten Winkelbereichen des bereitgestellten Stromraumzeigers einen bestimmten Nullvektor zu verwenden, um die Schaltverluste der Leistungshalbleiterschalter zu reduzieren.

Nachteilig dabei ist es, dass in bestimmten Ansteuerungssituationen, insbesondere bei sehr geringen Rotationsgeschwindigkeiten des Stromraumzeigers, einzelne der Leistungshalbleiterschalter thermisch dauerhaft belastet werden und somit in bestimmten Situationen der Wechselrichter ungleichmäßig belastet wird und eine Überlastung einzelner der Leistungshalbleiterschalter nicht vermieden erden kann. Die US 563819 offenbart eine Raumzeigermodulationsansteuerschaltung für einen Motorwechselrichter.

Offenbarung der Erfindung

Erfindungsgemäß wird daher ein Verfahren zum Ansteuern des Wechselrichters mittels Raumzeigermodulation der eingangs genannten Art bereitgestellt, wobei der Wechselrichter derart angesteuert wird, dass der Stromraumzeiger mit einem Phasenwinkel bereitgestellt wird, der von dem Referenzphasenwinkel abweicht, wobei die Abweichung des Phasenwinkels von dem Referenzphasenwinkel in Abhängigkeit einer Verlustleistung und/oder einer Temperatur wenigstens eines der Schalter bestimmt wird.

Ferner wird daher erfindungsgemäß eine Vorrichtung zum Ansteuern eines Wechselrichters der eingangs genannten Art bereitgestellt, wobei das Steuergerät dazu ausgebildet ist, den Wechselrichter derart anzusteuern, dass der Stromraumzeiger mit einem Phasenwinkel bereitgestellt wird, der von dem Referenzphasenwinkel abweicht, wobei die Abweichung des Phasenwinkels von dem Referenzphasenwinkel auf der Grundlage einer Verlustleistung und/oder einer Temperatur wenigstens einer der Schalter bestimmt wird.

Schließlich wird erfindungsgemäß ein Kraftfahrzeugantriebsstrang bereitgestellt mit wenigstens einer elektrischen Maschine zum Bereitstellen von Antriebsleistung, einem Wechselrichter zum Ansteuern der elektrischen Maschine und mit einer Vorrichtung zum Ansteuern des Wechselrichters der oben beschriebenen Art.

Vorteile der Erfindung

Dadurch, dass der Stromraumzeiger mit einem Phasenwinkel bereitgestellt wird, der sich von dem Referenzphasenwinkel unterscheidet, kann einer der steuerbaren Schalter in bestimmten Situationen, in denen der steuerbare Schalter, insbesondere thermisch, überlastet wird oder überlastet zu werden droht, entlastet werden, indem der Stromraumzeiger mit einem Phasenwinkel bereitgestellt wird, der den überlasteten steuerbaren Schalter entlastet und einen anderen steuerbaren Schalter stärker belastet.

Dadurch kann die Belastung der steuerbaren Schalter bzw. der Phasen des Wechselrichters variiert werden und somit der Wechselrichter phasig gleichmäßiger belastet werden. Im Ergebnis kann somit auch für kritische Phasenwinkel ein Stromraumzeiger bereitgestellt werden, der den Wechselrichter bzw. die Phasen des Wechselrichters nicht einseitig überlastet. Somit können die steuerbaren Schalter im Allgemeinen für geringere Spitzenbelastungswerte ausgelegt werden, wodurch der Wechselrichter im Allgemeinen technisch weniger aufwändig und kostengünstiger gefertigt werden kann. Ferner wird durch die gleichmäßigere Belastung der Schalter bzw. der Phasen des Wechselrichters die Lebensdauer des Wechselrichters im Allgemeinen verlängert.

Vorzugsweise wird die Verlustleistung und/oder die Temperatur von zwei oder drei Schaltern berücksichtigt, die die maximalen Verluste und/oder die maximale Temperatur aller Schalter aufweisen.

Dadurch können Spitzenwerte der Belastung der Schalter mit einfachen Mitteln erfasst und reduziert werden.

Es ist dabei besonders bevorzugt, wenn die Abweichung derart eingestellt wird, dass die maximalen Verluste der zwei oder der drei Schalter im Wesentlichen gleich sind oder maximal um einen vordefinierten Wert voneinander abweichen.

Dadurch lässt sich eine gleichmäßige Belastung der Schalter bzw. der Phasen des Wechselrichters einstellen.

Es ist weiterhin bevorzugt, wenn die Abweichung in Abhängigkeit einer Änderungsfunktion der Verlustleistung bestimmt wird, und wobei die Änderungsfunktion die Änderung der Verlustleistung wenigstens eines Schalters in Abhängigkeit der Abweichung des Phasenwinkels bildet.

Dadurch kann der Einfluss des Phasenwinkels auf die Änderung der Verlustleistung und somit der Temperatur der steuerbaren Schalter berücksichtigt werden und der Phasenwinkel zielgerichtet verändert werden, um eine gleichmäßige Belastung zu erzielen.

Es ist weiterhin bevorzugt, wenn der Phasenwinkel vergrößert wird, sofern die Temperatur eines der Schalter größer ist als die Temperatur der anderen Schalter und ein Wert der Änderungsfunktion kleiner ist als ein vordefinierter Wertebereich, und wobei die Abweichung verkleinert wird, sofern ein Wert der Änderungsfunktion größer ist als der vordefinierte Wertebereich, und wobei die Abweichung konstant gehalten wird, sofern der Wert der Änderungsfunktion innerhalb des vordefinierten Wertebereichs liegt.

Dadurch kann die Verlustleistung und/oder die Temperatur des am stärksten belasteten steuerbaren Schalters schnell und präzise angepasst werden, da nicht nur der absolute Wert der Verlustleistung und/oder der Temperatur berücksichtigt werden, sondern auch der Einfluss des Phasenwinkels auf die Verlustleistung in dem steuerbaren Schalter berücksichtigt wird.

Es ist dabei besonders bevorzugt, wenn die Änderungsfunktion die Änderung der Verlustleistung von zwei Schaltern in Abhängigkeit der Abweichung des Phasenwinkels bildet.

Dadurch kann zusätzlich der Einfluss des Phasenwinkels auf die relative Belastung von zwei der Schalter berücksichtigt werden, wodurch die Anpassung der Verlustleistung und/oder der Temperatur besonders effektiv wird und einer ungleichmäßigen Belastung des Wechselrichters schnell und effektiv entgegengewirkt werden kann.

Es ist dabei besonders bevorzugt, wenn die Abweichung vergrößert wird, sofern die Temperatur von zwei der drei Schalter im Wesentlichen gleich ist und der Wert der Änderungsfunktion kleiner ist als ein vordefinierter Wertebereich, und wobei die Abweichung verringert wird, sofern der Wert der Änderungsfunktion größer ist als der vordefinierter Wertebereich, und wobei die Abweichung konstant gehalten wird, sofern der Wert der Änderungsfunktion innerhalb des Wertebereichs liegt.

Dadurch kann auf die besondere Temperaturverteilung individuell reagiert werden, wodurch das Verfahren zur Einstellung einer gleichmäßigen Belastung des Wechselrichters besonders effektiv wird.

Es ist weiterhin bevorzugt, wenn die Änderungsfunktion die Änderung der Verlustleistung des Schalters mit der höchsten Temperatur in Abhängigkeit der Abweichung des Phasenwinkels bildet.

Dadurch können Spitzenbelastungen eines der Schalter besonders effektiv reduziert bzw. vermieden werden.

Es ist weiterhin bevorzugt, wenn der Wechselrichter ferner eine Mehrzahl von Freilaufdioden aufweist, und wobei die Abweichung des Phasenwinkels ferner in Abhängigkeit einer Verlustleistung und/oder einer Temperatur wenigstens einer der Freilaufdioden bestimmt wird.

Dadurch können ebenfalls die Belastungen der Freilaufdioden berücksichtigt werden, wodurch die Belastung einzelner der Freilaufdioden im Allgemeinen reduziert werden kann und die Freilaufdioden für geringere Spitzenbelastungen ausgelegt werden können.

Es ist besonders bevorzugt, wenn mittels des Wechselrichters eine elektrische Maschine angesteuert wird, und wobei der Referenzphasenwinkel in Abhängigkeit eines Rotorwinkels der elektrischen Maschine bestimmt wird, insbesondere dem Rotorwinkel entspricht.

Dadurch kann die elektrische Maschine auch für geringe Drehzahlen mittels des Wechselrichters angesteuert werden, ohne dass einzelne der steuerbaren Schalter überlastet werden.

Insgesamt können somit die Phasen des Wechselrichters bzw. einzelne der steuerbaren Schalter und/oder einzelne der Freilaufdioden entlastet und der Wechselrichter im Allgemeinen gleichmäßiger belastet werden, da eine Abweichung des Stromphasenwinkels bzw. eine Variation des Stromphasenwinkels eine eher geringe Auswirkung auf die ansteuerbare Last hat.

Es versteht sich, dass Merkmale, Eigenschaften und Vorteile des erfindungsgemäßen Verfahrens auch entsprechend auf die erfindungsgemäße Vorrichtung zutreffen bzw. anwendbar sind.

Kurze Beschreibung der Zeichnungen

Figur 1 zeigt in schematischer Form einen Wechselrichter zum Ansteuern eines elektrischen Verbrauchers;

Figur 2 zeigt ein komplexes Zeigerdiagramm zur Erläuterung des Raumzeigermodulationsverfahrens zum Ansteuern des Wechselrichters eines elektrischen Verbrauchers;

Figur 3 zeigt in schematischer Form einen Verlauf von drei Strangspannungen zum Einstellen unterschiedlicher Spannungsraumzeiger;

Figur 4 zeigt ein komplexes Zeigerdiagramm der zur Erläuterung des Zusammenhangs zwischen einem Rotorwinkel einer elektrischen Maschine und einem Stromraumzeiger zum Antreiben der elektrischen Maschine;

Figur 5 zeigt in schematischer Form ein komplexes Zeigerdiagramm zum Einstellen eines Stromraumzeigers;

Figur 6 zeigt ein komplexes Zeigerdiagramm zum Einstellen eines alternativen Stromraumzeigers;

Figur 7 zeigt in schematischer Form einen Ablauf zum Bestimmen eines Stromraumzeigers auf der Grundlage von Verlustleistungen und/oder Temperaturen der steuerbaren Schalter des Wechselrichters; und

Figur 8 zeigt ein schematisches Ablaufdiagramm zur Erläuterung des erfindungsgemäßen Verfahrens.

Ausführungsformen der Erfindung

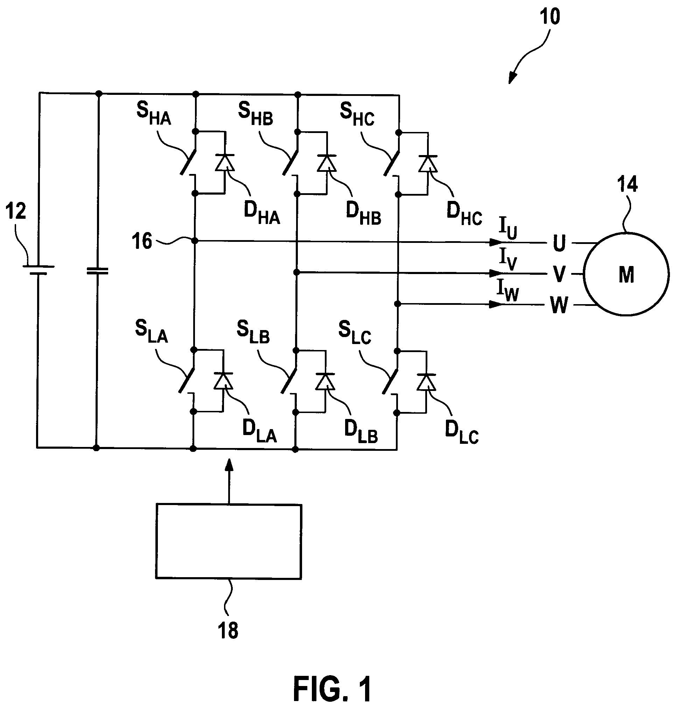

In Figur 1 ist ein Wechselrichter zum Ansteuern eines elektrischen Verbrauchers, insbesondere einer elektrischen Maschine schematisch dargestellt und allgemein mit 10 bezeichnet.

Der Wechselrichter 10 ist mit einer Gleichspannungsquelle 12 verbunden und dient dazu, den elektrischen Verbraucher 14, der in diesem Fall als elektrische Maschine 14, insbesondere als Sychronmaschine 14ausgebildet ist, dreiphasig zu bestromen. Der Wechselrichter 10 weist drei Halbbrücken auf, die parallel zu der Gleichspannungsquelle 12 geschaltet sind und jeweils zwei steuerbare Schalter S aufweisen. Zwischen den Schaltern S ist jeweils ein Halbbrückenabgriff 16 gebildet, die jeweils mit einem Phasenleiter der Phasen U, V, W der elektrischen Maschine 14 verbunden sind.

Parallel zu den Schaltern S ist jeweils eine Freilaufdiode D geschaltet, die einen Stromfluss in entgegengesetzter Richtung ermöglicht.

In Figur 1 sind die Schalter S entsprechend der Phase U, V, W, die sie bereitstellen und entsprechend der Zuordnung zu einem hohen Potenzial der Gleichspannungsquelle 12 oder einem niedrigen Potenzial der Gleichspannungsquelle 12 mit SHA, SLA, SHB, SLB, SHC, SLC bezeichnet. Entsprechend sind die Freilaufdioden bezeichnet mit DHA, DLA, DHB, DLB, DHC, DLC.

Durch wechselndes Öffnen und Schließen der Schalter S wird zwischen den Phasenleitern U, V, W jeweils eine Ansteuerspannung angelegt, sodass sich entsprechend jeweils ein Phasenstrom IU, IV, IW einstellt, der die elektrische Maschine 14 antreibt. Der Wechselrichter 10 ist vorzugsweise mittels Halbleiterschaltern ausgebildet. Die Schalter S des Wechselrichters 10 werden mittels einer schematisch dargestellten Steuereinheit 18 wechselnd geöffnet und geschlossen, um die Phasenspannungen mit einem bestimmten Verlauf bereitzustellen, und einen Spannungsraumzeiger bereitzustellen und die elektrische Maschine 14 entsprechend mit den Phasenströmen IU, IV, IW in Form eines Stromraumzeigers zu bestromen. Dabei wird der Spannungszeiger durch den Wechselrichter 10 bereitgestellt, woraufhin sich der Stromraumzeiger in Abhängigkeit der angesteuerten Last entsprechend einstellt.

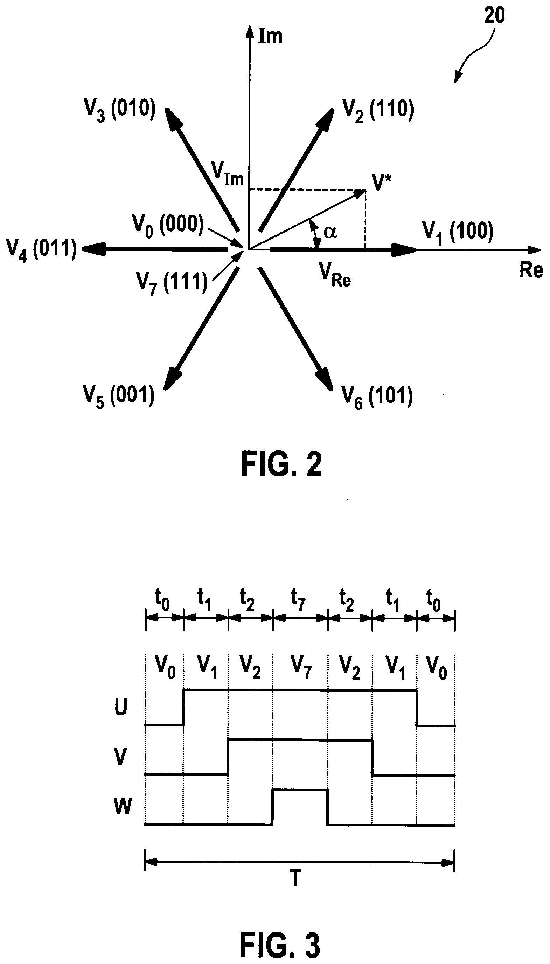

In Figur 2 ist ein komplexes Zeigerdiagramm zur Erläuterung der Raumzeigermodulation zum Ansteuern des elektrischen Verbrauchers 14 beziehungsweise der elektrischen Maschine 14 dargestellt und allgemein mit 20 bezeichnet.

In dem Zeigerdiagramm 20 ist ein Spannungszeiger V* mit einem Ansteuerungswinkel Alpha der elektrischen Maschine 14 dargestellt. In dem Zeigerdiagramm 20 sind ferner sechs Grundspannungszeiger V1, V2, V3, V4, V5, V6 dargestellt, die sich ergeben, wenn einzelne oder zwei der Schalter S des Wechselrichters 10 geschlossen werden und die elektrische Maschine entsprechend angesteuert wird. Um den Spannungszeiger V* mit maximaler Länge einzustellen, der in diesem Beispiel den Ansteuerwinkel Alpha zwischen den Grundspannungszeigern V1 und V2 aufweist, wird dieser durch abwechselndes Ansteuern des Wechselrichters 10 entsprechend dem Grundspannungszeiger V1 und dem Grundspannungszeiger V2 realisiert. Die beiden Grundspannungszeiger V1, V2 werden abwechselnd eingestellt mit einer vordefinierten Schaltfrequenz, sodass sich bei gleicher Einschaltdauer der Grundspannungszeiger V1, V2 der Spannungszeiger V* mit einem Phasenwinkel von 30° ergibt. Sofern ein Spannungszeiger V* mit einem größeren Ansteuerungswinkel Alpha eingestellt werden muss, wird entsprechend die Einschaltdauer des Grundspannungszeigers V2 verlängert und die Einschaltdauer des Grundspannungszeigers V1 verkürzt. Somit lässt sich durch getaktetes Ansteuern der Schalter S des Wechselrichters 10 der Spannungsraumzeiger V* mit einem beliebigen Ansteuerwinkel Alpha realisieren.

Sofern der Spannungszeiger V*, wie in dem in Figur 2 dargestellten Fall mit einem geringeren Betrag (geringere Länge) als die Grundspannungsraumzeiger V1, V2 eingestellt werden soll, wird entsprechend einer der Nullspannungszeiger V0, V7 eingestellt, bei denen die Schalter SHA, SHB, SHC auf der oberen Seite bzw. SLA, SLB, SLC auf der unteren Seite des Wechselrichters 10 geöffnet sind. Die jeweils anderen der Schalter S sind entsprechend geschlossen. Entsprechend kann der Spannungszeiger V* durch eine Kombination der Grundspannungsraumzeiger V1 und V2 und einem der Nullspannungszeiger V0, V7 realisiert werden.

In Abhängigkeit des Spannungsraumzeigers V* stellt sich ein Stromraumzeiger I* ein. Der Stromraumzeiger I* weist eine Amplitude und einen Phasenwinkel auf, die sich in Abhängigkeit des angesteuerten elektrischen Verbrauchers 14 einstellen. Der Phasenwinkel des Stromraumzeigers I* kann phasengleich mit dem Phasenwinkel $\alpha$ des Spannungsraumzeigers V* sein oder eine Phasenverschiebung aufweisen.

Zur Bestromung des Verbrauchers 14 beziehungsweise der elektrischen Maschine 14 wird zunächst der Spannungsraumzeiger V* bereitgestellt, indem die unterschiedlichen Grundspannungsraumzeiger V1-V6 und die Nullspannungszeiger V0, V7 in einer schnellen Abfolge hintereinander eingestellt werden, wodurch sich der Stromraumzeiger I* einstellt. Die unterschiedlichen Schalter S und die unterschiedlichen Freilaufdioden D des Wechselrichters 10 werden bei einem schnell rotierenden Spannungsraumzeiger V* gleichmäßig belastet, insbesondere phasig gleichmäßiger belastet. Sofern die Rotationsfrequenz des Spannungsraumzeigers V* sehr gering oder null ist, zum Beispiel bei geringen Drehzahlen der elektrischen Maschine 10, werden die entsprechenden Schalter S und die Freilaufdioden D des Wechselrichters 10 einer Phase U, V, W über einen langen Zeitraum belastet, sodass eine Überlastung der entsprechenden Schalter S und der Freilaufdioden D auftreten kann und die Schalter S und die Freilaufdioden D des Wechselrichters 10 im Allgemeinen ungleichmäßig, insbesondere phasig ungleichmäßig belastet werden. Um eine Überlastung einzelner der Schalter S und Freilaufdioden D zu verhindern, müssen Maßnahmen ergriffen werden, um die Belastung auf unterschiedliche der Schalter S und der Freilaufdioden D zu verteilen.

In Figur 3 sind Verläufe der Phasenspannungen der drei Phasen U, V, W innerhalb einer Pulsweitenmodulationsperiode T dargestellt, um die Grundspannungsraumzeiger V0, V1, V2, V7 nacheinander einzustellen. Innerhalb der Pulsweitenmodulationsperiode T kann eine Einschaltdauer t0, t1, t2, t7 der einzelnen Grundspannungsraumzeiger V0, V1, V2, V7 variiert werden, um den Spannungsraumzeiger V* präzise einstellen zu können.

Die Verluste und somit die Temperatur der Schalter S und der Freilaufdioden D sind ausschließlich eine Funktion des Betrages V des Spannungsraumzeigers V*, des Phasenwinkels alpha_V, des Betrages I des Stromraumzeigers I* und des Phasenwinkels alpha_I sind.

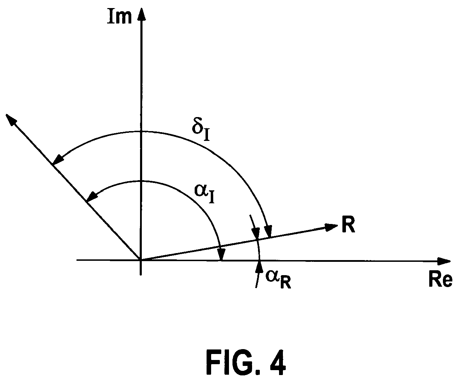

Figur 4 zeigt ein komplexes Zeigerdiagramm zur Erläuterung des Zusammenhanges zwischen einer Rotorposition der elektrischen Maschine 14 und einem Stromzeiger I* zum Antreiben des Rotors der elektrischen Maschine 14. In Figur 4 ist die elektrische Rotorposition schematisch dargestellt und mit R bezeichnet. Der Rotor weist in dieser Position einen elektrischen Rotorwinkel alpha_R auf. Der Stromzeiger I* muss zum Antreiben des Rotors der elektrischen Maschine 14 der elektrischen Rotorposition R vorauseilen, um ein entsprechendes Drehmoment auf den Rotor auszuüben. Aus diesem Grund weist der Stromraumzeiger I* einen Phasenwinkel alpha_I auf, der größer ist als der Rotorwinkel alpha_R. In Figur 4 eilt der Stromraumzeiger I* dem Rotor der elektrischen Maschine 14 um einen Abweichungswinkel delta_I voraus. Der Zusammenhang zwischen dem elektrischen Rotorwinkel alpha_R und dem Abweichungswinkel delta_I ist gegeben durch die Formel:

$$alpha\_I = alpha\_R + delta\_I$$

wobei delta_I der Winkel zwischen dem elektrischen Rotorwinkel alpha_R der elektrischen Maschine 14 und dem Stromraumzeiger I* ist.

Der Abweichungswinkel delta_I ist üblicherweise in Abhängigkeit des Maschinentyps und des Arbeitspunktes der elektrischen Maschine 14 fest vorgegeben. Mit anderen Worten wird ausgehend von der elektrischen Rotorposition R ein Sollstromraumzeiger mit einem festen Abweichungswinkel delta_I vorgegeben. Der Sollstromraumzeiger wird dabei so eingestellt bzw. bestimmt, dass der Wechselrichter 10 und die elektrische Maschine 14 einen optimalen Wirkungsgrad haben. Unter bestimmten Voraussetzungen kann der Abweichungswinkel delta_I variiert werden, ohne dass das abgegebene Drehmoment der elektrischen Maschine 14 beeinträchtigt wird, wie es im Weiteren näher erläutert ist.

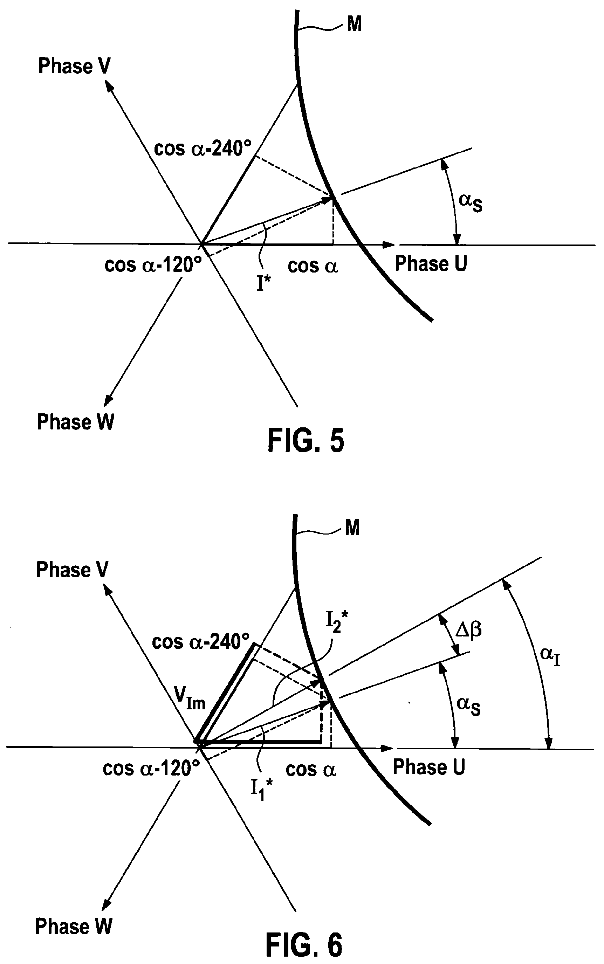

In Figur 5 ist ein komplexes Zeigerdiagramm eines Stromraumzeigers I* schematisch dargestellt. Der Stromraumzeiger I* weist einen Betrag I und einen Phasenwinkel alpha_S auf. Sofern der Wechselrichter 10, der den Stromraumzeiger I* einstellt, zum Ansteuern der elektrischen Maschine 14 eingesetzt wird, erzeugt die elektrische Maschine 14 ein Drehmoment M. In dem komplexen Zeigerdiagramm aus Figur 5 sind die einzelnen Phasen U, V, W mit einem Winkel von 120° zueinander dargestellt. Eine Projektion des Stromraumzeigers I* auf die entsprechenden Phasen U, V, W entspricht dabei dem Strom, der in den zugeordneten Schalter S eingestellt wird. Durch diese Projektion, die durch die gestrichelten Linien angedeutet ist, kann somit die Belastung der einzelnen Schalter S bzw. Freilaufdioden D direkt abgelesen werden. In dem dargestellten Beispiel aus Figur 5 wird somit der Schalter SHA durch die Phase U am stärksten belastet, wobei der Schalter SHC der Phase W weniger belastet wird, als der Schalter SHA und der Schalter SHB der Phase V sehr gering belastet wird.

In Figur 6 ist das bereitgestellte Drehmoment M der angeschlossenen elektrischen Maschine 14 als Kurve dargestellt, die gleichzeitig eine Kurve konstanten Drehmomentes M darstellt. Das von der elektrischen Maschine 14 abgegebene Drehmoment M ist eine Funktion eines Winkels Delta_I, um den der Stromzeiger I* dem Rotor der elektrischen Maschine 14 vorauseilt und der Amplitude I des Stromraumzeigers I*:

$$M = f(Delta\_I, I).$$

Daraus wird ersichtlich, dass das Drehmoment M, das von der elektrischen Maschine 14 abgegeben wird, konstant ist, sofern der Stromraumzeiger I* der in Figur 6 dargestellten Linie konstanten Drehmoments M folgt.

Aus Fig. 6 ist ersichtlich, dass der Differenzwinkel alpha_I variiert werden kann, ohne dass das von der elektrischen Maschine 14 abgegebene Drehmoment sich ändert, sofern der Stromraumzeiger I* der Linie des konstanten Drehmomentes M folgt.

Eine derartige Variation des Stromraumzeigers ist in einem komplexen Zeigerdiagramm in Figur 6 schematisch dargestellt.

In dem in Figur 6 dargestellten komplexen Zeigerdiagramm ist ein Sollstromraumzeiger I1* mit dem Phasenwinkel alpha1 und dem Betrag I1 dargestellt und ein Stromraumzeiger I2* mit dem Phasenwinkel alpha2 und dem Betrag 12. Beide Stromraumzeiger I1*, I2* geben das gleiche Drehmoment M ab, da sie auf der Linie gleichen Drehmoments M verlaufen. Der Sollstromraumzeiger I1* ist identisch mit dem Stromzeiger I* aus Figur 5. Der Stromraumzeiger I2* weist einen Phasenwinkel alpha_I auf, der größer ist, als der Phasenwinkel alpha_S des Sollstromraumzeigers I1*. Die Differenz zwischen den Phasenwinkeln alpha_S und alpha_I ist in Figur 6 als delta_beta bezeichnet. delta_beta kann in Abhängigkeit des Phasenwinkels alpha_S unterschiedlich groß sein und schwanken maximal zwischen +30° und -30°. Durch die in Figur 6 dargestellte Projektion des Stromraumzeigers I2* auf die entsprechenden Phasenachsen der Phasen U, V, W wird deutlich, dass der Strom IU in der Phase U also in dem Schalter SHA gegenüber I1* reduziert ist und der Strom IW in der Phase W also dem Schalter SHC und der Freilaufdiode DLC erhöht ist. Insgesamt ist die Strombelastung durch den größeren Betrag des Stromraumzeigers I2* größer als bei dem Sollstromraumzeiger I1*, jedoch kann durch diese Maßnahme wie aus Figur 6 ersichtlich ist, die Belastung des am stärksten belasteten Schalters SHA und der Freilaufdiode DLA reduziert werden. Dadurch können Spitzenbelastungen der am stärksten belasteten Schalter S und auch der am stärksten belasteten Freilaufdioden D reduziert werden und die Belastung auf andere Schalter S oder Freilaufdioden D verteilt werden. Dadurch kann der Wechselrichter 10 phasig gleichmäßiger belastet werden. Da der Stromzeiger I2* der Linie gleichen Drehmoments M folgt, wird ein identisches Drehmoment M von der elektrischen Maschine 14 bereitgestellt, sodass diese Maßnahme für den Nutzer der elektrischen Maschine 14 keine Einschränkung darstellt und beispielsweise kein Stottern oder ein Einbruch des Drehmoments M auftritt. Durch die Einstellung des Stromraumzeigers I2*, der von dem Sollstromraumzeiger I1* abweicht, können die Verluste in den einzelnen Phasen U, V, W verteilt werden und somit eine Überlastung einzelner Bauteile einzelner Phasen vermieden werden. Mit anderen Worten kann somit eine gleichmäßigere Belastung der Phasen U, V, W erreicht werden, um dasselbe Ergebnis zu erzielen.

Im Ergebnis kann somit durch das Bereitstellen eines alternativen Stromraumzeigers I2* mit einem von dem Sollphasenwinkel alpha_S abweichenden Phasenwinkel alpha_I eine Reduktion des am meisten belasteten Schalters SHA und der Freilaufdiode DLA bzw. der am stärksten belasteten Phase U erzielt werden und somit der Wechselrichter 10 im Allgemeinen gleichmäßiger belastet werden. Übertragen auf das erfindungsgemäße Verfahren und Figur 4 bedeutet das, wenn der Differenzwinkel delta_beta zwischen +30° und -30° um den Sollstromraumzeiger I1* schwanken kann, kann der Abweichungswinkel delta_I des Stromraumzeiger I* um 60° schwanken, um eine gleichmäßigere Belastung zu erzielen.

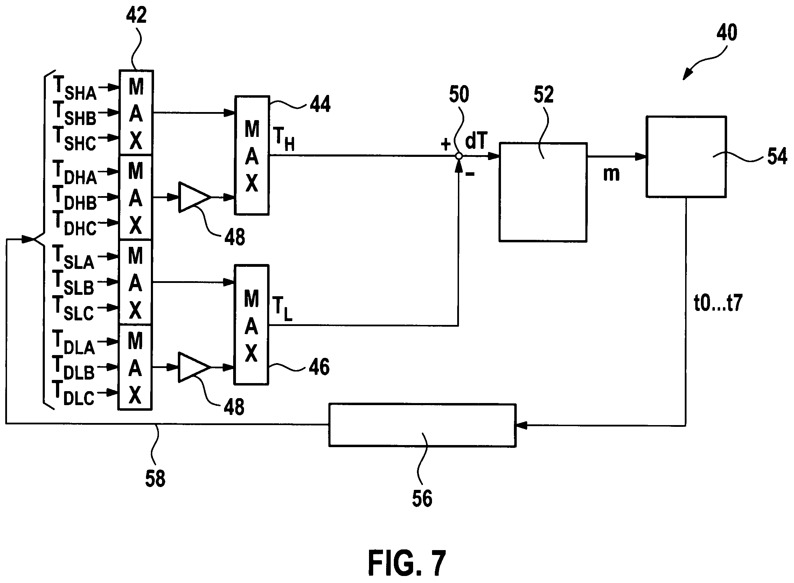

Falls die Freilaufdioden D stark belastbar sind kann delta_beta auch mit einem negativen Wert eingestellt werden, um einzelne der Schalter S zu entlasten. In der in Figur 7 dargestellten Ansteuerungssituation wird zunächst durch die Auswahl des Nullspannungszeigers V0 der Schalter SHA entlastet und somit die Freilaufdiode DLA stärker belastet. Dadurch werden auch die Schalter SLB, SLB stärker belastet. Für den Phasenwinkel alpha_1 wird dann die Freilaufdiode DLA am stärksten, der Schalter SLC weniger stark und der Schalter SLB sehr gering belastet. In dieser Situation kann durch einen Phasenwinkel alpha_2, der kleiner ist als alpha_1, also mit einem negativen Abweichungswinkel delta_beta, die Freilaufdiode DLA stärker belastet werden, wodurch allerdings der Schalter SLC entlastet und der Schalter SLB stärker belastet wird. Somit kann die Belastung der Schalter SLB und SLC gleichmäßiger verteilt werden. Dies erfolgt allerdings auf Kosten einer stärkeren Belastung der Freilaufdiode DLA.

Mit anderen Worten wird zunächst die Belastung von einem oberen Schalter SH auf eine untere Freilaufdiode DL verlagert und zwar durch Wahl einer geeigneten zeitlichen Verteilung der Nullspannungszeiger V0, V7 und dann wird die Belastung bei dem Nullspannungszeiger V0, V7 durch Einstellen des Abweichungswinkels delta_beta auf die Phasen U,V,W verteilt. So kann im Allgemeinen die Belastung der Schalter S und der Freilaufdioden D gleichmäßiger eingestellt werden.

In Figur 6 sind zwei Belastungsfälle gezeigt. In Figur 7 ist ein allgemeines Verfahren gezeigt, das alle Belastungsfälle abdeckt.

In Figur 7 ist ein Verfahren dargestellt, um den Phasenwinkel alpha_I auf der Grundlage einer geschätzten oder gemessenen Temperatur $T_D$, $T_S$ der Schalter S und/oder der Freilaufdioden D zu bestimmen und einen neuen Stromraumzeiger I* einzustellen. In Figur 7 ist das Verfahren allgemein mit 40 bezeichnet.

Als Eingangsgröße dienen allgemein die Temperaturen $T_D$, $T_S$ der Schalter S und der Freilaufdioden D. Bei 42 wird über die Temperaturen $T_D$, $T_S$ der am stärksten belastete obere Schalter SH, die am stärksten belastete obere Freilaufdiode DH, der am stärksten belastete untere Schalter SL und die am stärksten belastete untere Freilaufdiode DL ermittelt. Mit anderen Worten wird das jeweilige Bauelement ermittelt, das die höchste Temperatur aufweist. Aus diesen Temperaturen wird bei 44 und 46 die maximale Temperatur T_H der oberen Schalter und/oder der oberen Freilaufdioden und die maximale Temperatur T_L der unteren Seite ermittelt. Dabei wird die Temperatur $T_D$ der Freilaufdioden D faktorisiert um die Temperaturen der Schalter S und der Freilaufdioden D vergleichen zu können, wie es bei 48 gezeigt ist. An einem Summationspunkt 50 wird die Differenz dT zwischen der maximalen Temperatur T_H der oberen Seite und der maximalen Temperatur T_L der unteren Seite ermittelt. Bei 52 wird in Abhängigkeit der Temperaturdifferenz dT ein geänderter Belastungssollwert m bestimmt, um die Temperaturdifferenz dT entsprechend auszugleichen. Sofern die Temperaturdifferenz dT > 0 ist, wird der Belastungssollwert m reduziert und sofern die Temperaturdifferenz dT < 0 ist, wird der Belastungssollwert m erhöht. In Abhängigkeit des so bestimmten Belastungssollwertes m werden bei 54 neue Einschaltdauern t0-t7 für die folgende Pulsweitenmodulationsperiode T bestimmt. In Abhängigkeit der neuen Pulsweitenmodulationsperiode T werden geänderte Temperaturen $T_D$, $T_S$ der Schalter S und der Freilaufdioden D ermittelt, wie es bei 56 gezeigt ist und als neue Eingangsgrößen für das Verfahren 14 bereitgestellt, wie es durch die Rückführung 58 angedeutet ist. Dadurch kann auf der Grundlage der gemessenen oder geschätzten Temperatur der Schalter S und/oder der Freilaufdioden D für jede Pulsweitenmodulationsperiode T ein neuer Belastungssollwert m bestimmt werden, um die entsprechenden Schalter S und Freilaufdioden D zwischen der oberen und der unteren Seite des Wechselrichters 10 gleichmäßiger zu belasten.

Zum Einstellen des Phasenwinkels alpha_I des Stromraumzeigers I*, um eine gleichmäßige Belastung der Phasen U, V, W zu erzielen, werden zunächst die drei am stärksten belasteten Bauelemente also Schalter und/oder Freilaufdioden bestimmt, die im Folgenden allgemein als SDA, SDB, SDC bezeichnet sind.

Die Schalter bzw. Freilaufdioden SDA, SDB, SDC weisen jeweils eine Verlustleistung PA, PB, PC und eine entsprechende Temperatur TA, TB, TC auf, wobei die Verluste und die Temperatur der Freilaufdioden D entsprechend faktorisiert werden, um mit den Verlusten und Temperaturen der Schalter S verglichen werden zu können. Die Verlustleistung PA des Schalters bzw. der Freilaufdiode SDA ist eine Funktion des Betrages I, des Phasenwinkels (alpha_R + delta_I), des Belastungssollwert m, des Drehmoments M und der Rotationsfrequenz omega:

$$PA = f(I, alpha\_R + delta\_I, m, M, omega)$$

und entsprechend ist die Verlustleistung PB des steuerbaren Schalters bzw. der Freilaufdiode SDB:

$$PB = f(I, alpha\_R + delta\_I, m, M, omega).$$

Um eine gleichmäßige Belastung der steuerbaren Schalter bzw. der Freilaufdioden zu erzielen, werden zunächst drei der Schalter bzw. der Freilaufdioden SDA, SDB, SDC ausgewählt, die die höchste Temperatur TA, TB, TC aufweisen. Dabei wird angenommen, dass gilt: TA >= TB >= TC. Ferner wird aus den Verlustleistungen der Schalter bzw. der Freilaufdioden SDA, SDB, also die Schalter und/oder die Freilaufdioden mit den beiden höchsten Temperaturen TA, TB, eine Änderungsfunktion bestimmt:

$$GPS(I, alpha\_R + delta\_I, m, M, omega) = \frac{\partial}{\partial(delta\_I)}(PA + PB)$$

Diese Änderungsfunktion GPS gibt die Veränderung der Gesamtverlustleistung PA+PB in den beiden Schaltern bzw. der Freilaufdioden SDA und SDB in Abhängigkeit des Abweichungswinkels delta_I wieder. Entsprechend kann eine zweite Änderungsfunktion GPA ermittelt werden:

$$GPA(I, alpha\_R + delta\_I, m, M, omega) = \frac{\partial}{\partial(delta\_I)}(PA)$$

wobei die Änderungsfunktion GPA die Änderung der Verlustleistung in dem Schalter bzw. der Freilaufdiode SDA in Abhängigkeit des Abweichungswinkels delta_I wiedergibt.

Zum Einstellen des Abweichungswinkels delta_I in Abhängigkeit der Verlustleistung in den Schaltern bzw. Freilaufdioden SDA, SDB, SDC und der jeweiligen Temperatur TA, TB, TC werden drei Fälle unterschieden.

Zunächst wird ein Temperaturbereich delta_T definiert, um den die Temperatur der steuerbaren Schalter SDA, SDB voneinander abweichen darf, so dass die Temperaturen TA, TB als gleich betrachtet werden. Ferner wird ein Bereich delta_GP mit den Grenzen +GP und -GP definiert, um zu entscheiden, ob die Änderungsfunktionen GPS, GPA als positiv, negativ oder null betrachtet werden.

Fall 1: Sofern TA < = TB + delta_T und TA > TC + delta_T gilt, wird angenommen, dass die steuerbaren Schalter bzw. die Freilaufdioden SDA und SDB eine gleiche Temperatur aufweisen. Für diesen Fall werden drei Varianten unterschieden: sofern GPS < - GP ist, wird delta_I erhöht; sofern GPS > GP ist, wird delta_I reduziert; und sofern -GP <= GPS <= +GP, bleibt delta_I konstant. Mit anderen Worten wird der Abweichungswinkel erhöht, sofern die Gesamtverlustleistung PA + PB mit zunehmendem Abweichungswinkels delta_I sinkt, sofern die Gesamtverluste PA + PB mit zunehmendem Abweichungswinkel delta_I steigt, , wird der Abweichungswinkel delta_I reduziert, damit die Gesamtverluste PA + PB reduziert werden können, und sofern die Änderungsfunktion GPS in dem Abweichungsbereich delta_GP liegt, bleibt der Abweichungswinkel delta_I konstant, da hier das Ziel bereits erreicht ist.

Fall 2: Sofern TA <= TB + delta_T und TA <= TC + delta_T, wird angenommen, dass die Temperaturen der drei steuerbaren Schalter bzw. Freilaufdioden SDA, SDB, SDC gleich sind. In diesem Fall bleibt der Abweichungswinkel delta_I konstant.

Fall 3: Wenn TA >TB + delta_T, wird angenommen, dass die Temperatur TA des steuerbaren Schalters bzw. der Freilaufdiode SDA höher ist als die Temperatur TB, TC der steuerbaren Schalter bzw. der Freilaufdiode SDB und SDC. Dies kann dadurch bedingt sein, dass der Belastungssollwert m die Grenze 1 oder 0 erreicht hat. In diesem Fall werden drei Varianten unterschieden: Sofern GPA < -GP, wird der Abweichungswinkel delta_I erhöht; sofern GPA > +GP, wird der Abweichungswinkel delta_I reduziert, und sofern -GP <= GPA <= +GP, bleibt der Abweichungswinkel delta_I konstant. Mit anderen Worten wird der Abweichungswinkel delta_I erhöht, sofern die Leistung PA des steuerbaren Schalters bzw. der Freilaufdiode SDA mit der höchsten Temperatur mit zunehmendem Abweichungswinkels delta_I sinkt, und sofern die Leistung PA mit zunehmendem Abweichungswinkel delta_I steigt, wird der Abweichungswinkel delta_I reduziert, damit die Verlustleistung PA reduziert werden können. Sofern GPA innerhalb der Grenzen des Abweichungsbereichs delta GP liegt, kann der Abweichungswinkel delta_I konstant bleiben, da hier das Ziel bereits erreicht ist.

Mit Bezug auf Figur 6 wird deutlich, dass der Stromraumzeiger I1* den Schalter SHA und die Freilaufdiode DLA am stärksten belastet und, sofern in diesem Fall der Abweichungswinkel delta_I erhöht wird, so dass sich ein Phasenwinkel alpha_I des Stromraumzeigers I2* einstellt, wird die Belastung des Schalters SHA und der Freilaufdiode DLA reduziert und die Belastung der Phase W, also des Schalters SLC und der Freilaufdiode DHC, erhöht. Dadurch kann durch Variation des Abweichungswinkel delta_I ein Schalter S des Wechselrichters entlastet werden, und ein anderer der Schalter S des Wechselrichters W belastet werden, so dass im Ergebnis der Wechselrichter 10 gleichmäßiger belastet wird.

In einer alternativen Ausführungsform des Verfahrens 40 werden zur Bestimmung des Belastungssollwertes m anstatt der Temperaturen der Bauelemente S, D Verlustwerte verwendet, die durch Integration der Verlustleistung des jeweiligen Bauelementes S, D oder durch Integration des elektrischen Stroms I in dem jeweiligen Bauelement S, D und/oder durch Integration des Quadrates des elektrischen Stroms $I^2$ in dem jeweiligen Bauelement S, D über einen vordefinierten Zeitraum ermittelt bzw. bestimmt werden.

In einer weiteren Ausführungsform des Verfahrens 40 werden zur Bestimmung des Belastungssollwertes m anstatt der Temperaturen der Bauelemente S, D die elektrischen Verluste P oder der elektrische Strom I in dem jeweiligen Bauelement S, D und/oder das Quadrat des elektrischen Strom $I^2$ in dem jeweiligen Bauelement S, D verwendet, die jeweils mittels eines Tiefpassfilter gefiltert werden.

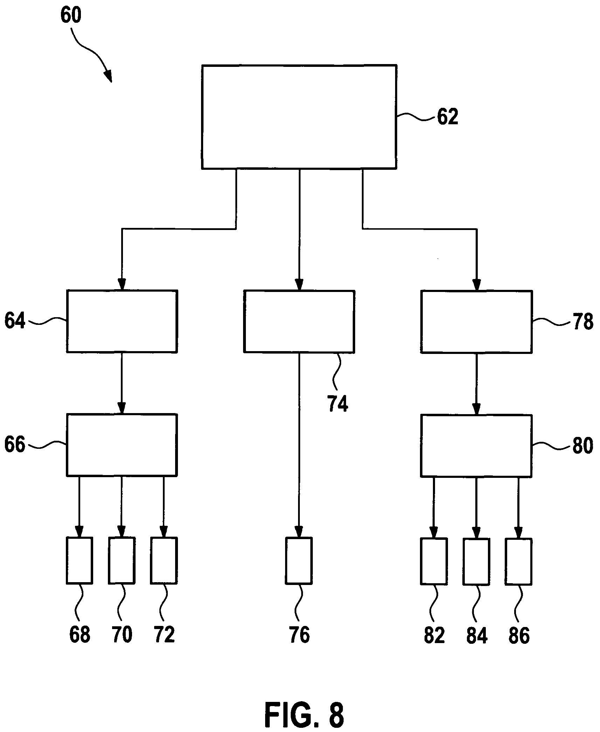

In Figur 8 ist ein schematisches Ablaufdiagramm zur Erläuterung des erfindungsgemäßen Verfahrens dargestellt und allgemein mit 60 bezeichnet.

Das Verfahren 60 beginnt mit der Auswahl von den drei am stärksten belasteten Schaltern bzw. Freilaufdioden SDA, SDB, SDC, und es werden die Verhältnisse der Temperaturen TA, TB, TC ermittelt, wie es bei 62 gezeigt ist. Sofern zwei der steuerbaren Schalter bzw. Freilaufdioden SDA und SDB eine gleiche Temperatur aufweisen, wird das Verfahren 60 bei 64 fortgesetzt. Für diesen Fall wird bei 66 das Verhältnis der Abweichungsfunktion GPS zu dem Abweichungsbereich delta_GP bestimmt. Sofern GPS < -delta_GP ist, wird bei 68 der Abweichungswinkel delta_I erhöht. Sofern GPS größer delta_GP ist, wird bei 70 der Abweichungswinkel delta_I reduziert, und sofern GPS innerhalb des Abweichungsbereichs delta_GP liegt, wird der Abweichungswinkel delta_I bei 72 konstant gehalten.

Für den zweiten Fall wird bei 74 festgestellt, dass die Temperaturen TA, TB, TC der drei steuerbaren Schalter bzw. Freilaufdioden SDA, SDB, SDC gleich sind und es wird bei 76 der Abweichungswinkel delta_I konstant gehalten.

Bei 78 wird festgestellt, ob die Temperatur eines der ausgewählten Schalter höher ist als die Temperaturen der beiden anderen ausgewählten Schalter bzw. Freilaufdioden. Für diesen dritten Fall wird bei 80 die Änderungsfunktion GPA für den Schalter bzw. die Freilaufdiode mit der höchsten Temperatur ermittelt und zum Abweichungsbereich delta_GP ins Verhältnis gesetzt. Sofern die Änderungsfunktion GPA < - GP, wird bei 82 der Abweichungswinkel delta_I erhöht. Sofern die Änderungsfunktion GPA größer ist als +GP, wird bei 84 der Abweichungswinkel delta_I reduziert. Sofern die Änderungsfunktion GPA innerhalb des Abweichungsbereiches delta_GP liegt, wird bei 86 der Abweichungswinkel delta_I konstant gehalten.

Dadurch kann in Abhängigkeit der Temperatur der drei am stärksten belasteten steuerbaren Schalter und/oder der am stärksten belastete Freilaufdioden SDA, SDB, SDC der Abweichungswinkel delta_I und der Belastungssollwert m eingestellt werden, um eine gleichmäßigere Belastung des Wechselrichters 10 zu erzielen.

## Patentansprüche

1. Verfahren (60) zum Ansteuern eines Wechselrichters (10) mittels Raumzeigermodulation, insbesondere zum Ansteuern einer elektrischen Maschine (14), wobei der Wechselrichter (10) eine Mehrzahl von steuerbaren Schaltern (S) aufweist und dazu ausgebildet ist, einen mehrphasigen elektrischen Strom (IU, IV, IW) bereitzustellen, insbesondere um eine elektrische Maschine (14) mehrphasig mit elektrischem Strom zu versorgen, wobei ein Referenzphasenwinkel (alpha_R) vorgegeben wird, wobei der Wechselrichter (10) derart angesteuert wird, dass eine Mehrzahl von unterschiedlichen aufeinanderfolgenden Schaltzuständen (V0-V7) der Schalter (S) eingerichtet wird, um den elektrischen Strom (IU, IV, IW) in Form eines Stromraumzeigers (I*) bereitzustellen, und wobei der Wechselrichter (10) derart angesteuert wird, dass der Stromraumzeiger (I*) mit einem Phasenwinkel (alpha_I) bereitgestellt wird, der von dem Referenzphasenwinkel (alpha_R) abweicht, wobei eine Abweichung (delta_I) des Phasenwinkels (alpha_I) von dem Referenzphasenwinkel (alpha_R) in Abhängigkeit einer Verlustleistung (PA, PB, PC) und/oder einer Temperatur (TA, TB, TC) wenigstens eines der Schalter (S) bestimmt wird.

2. Verfahren nach Anspruch 1, wobei die Verlustleistung (PA, PB, PC) und/oder die Temperatur (TA, TB, TC) von zwei oder drei Schaltern (S) berücksichtigt wird, die die maximalen Verluste (PA, PB, PC) und/oder die maximale Temperatur (TA, TB, TC) aller Schalter (S) aufweisen.

3. Verfahren nach Anspruch 2, wobei die Abweichung (delta_I) derart eingestellt wird, dass die maximalen Verluste (PA, PB, PC) der zwei oder der drei Schalter (S) im Wesentlichen gleich sind oder maximal um einen vordefinierten Wert (delta_T) voneinander abweichen.

4. Verfahren nach einem der Ansprüche 1 bis 3, wobei die Abweichung (delta_I) in Abhängigkeit einer Änderungsfunktion (GPS, GPA) der Verlustleistung bestimmt wird, und wobei die Änderungsfunktion (GPS, GPA) die Änderung der Verlustleistung wenigstens eines Schalters (S) in Abhängigkeit der Abweichung (delta_I) des Phasenwinkels (alpha_I) bildet.

5. Verfahren nach Anspruch 4, wobei die Abweichung (delta_I) vergrößert wird, sofern die Temperatur (TA, TB, TC) eines der Schalter (S) größer ist als die Temperatur (TA, TB, TC) der anderen Schalter (S) und ein Wert der Änderungsfunktion (GPA, GPS) kleiner ist als ein vordefinierter Wertebereich (delta_GP) und wobei die Abweichung (delta_I) verkleinert wird, sofern ein Wert der Änderungsfunktion (GPA, GPS) größer ist als der vordefinierte Wertebereich (delta_GP) und wobei die Abweichung (delta_I) konstant gehalten wird, sofern der Wert der Änderungsfunktion (GPS, GPA) innerhalb des vordefinierten Wertebereichs (delta_GP) liegt.

6. Verfahren nach Anspruch 4 oder 5, wobei die Änderungsfunktion (GPA, GPS) die Änderung der Verlustleistung von zwei Schaltern (S) in Abhängigkeit der Abweichung (delta_I) des Phasenwinkels bildet.

7. Verfahren nach Anspruch 6, wobei die Abweichung (delta_I) vergrößert wird, sofern die Temperatur von zwei der drei Schalter im Wesentlichen gleich ist und der Wert der Änderungsfunktion (GPS, GPA) kleiner ist als ein vordefinierter Wertebereich (delta_GP) und wobei die Abweichung (delta_beta) verringert wird, sofern der Wert der Änderungsfunktion (GPA, GPS) größer ist als der vordefinierte Wertebereich (delta_GP) und wobei die Abweichung (delta_I) konstant gehalten wird, sofern der Wert der Änderungsfunktion (GPA, GPS) innerhalb des Wertebereichs (delta_GP) liegt.

8. Verfahren nach Anspruch 4 oder 5, wobei die Änderungsfunktion (GPA, GPS) die Änderung der Verlustleistung des Schalters mit der höchsten Temperatur in Abhängigkeit der Abweichung (delta_I) des Phasenwinkels bildet.

9. Verfahren nach Anspruch 6 oder 7, wobei die die Änderungsfunktion (GPA, GPS) die Änderung der Verlustleistung von zwei der Schalter (S) mit der höchsten Temperatur in Abhängigkeit der Abweichung (delta_I) bildet.

10. Verfahren nach einem der Ansprüche 1 bis 9, wobei der Wechselrichter (10) ferner eine Mehrzahl von Freilaufdioden (D) aufweist und wobei die Abweichung (delta_I) des Phasenwinkels (alpha_I) ferner in Anhängigkeit einer Verlustleistung (PA, PB, PC) und/oder einer Temperatur (TA, TB, TC) wenigstens einer der Freilaufdioden (D) bestimmt wird.

11. Verfahren nach einem der Ansprüche 1 bis 10, wobei mittels des Wechselrichters (10) eine elektrische Maschine (14) angesteuert wird und wobei der Referenzphasenwinkel (alpha_R) in Abhängigkeit eines Rotorwinkels (alpha_R) der elektrischen Maschine (14) bestimmt wird, insbesondere dem Rotorwinkel (alpha_R) entspricht.

12. Vorrichtung (18) zum Ansteuern eines Wechselrichters (10), insbesondere zum Ansteuern einer elektrischen Maschine (14), wobei der Wechselrichter (10) eine Mehrzahl von ansteuerbaren Schaltern (S) aufweist, die dazu angeschlossen sind, einen mehrphasigen elektrischen Strom (IU, IV, IW) in Abhängigkeit eines Referenzphasenwinkels (alpa-R) bereitzustellen, insbesondere um die elektrische Maschine (14) mehrphasig zu bestromen, mit einem Steuergerät (18), das dazu ausgebildet ist, den Wechselrichter (10) derart anzusteuern, dass der Wechselrichter (10) eine Mehrzahl von aufeinanderfolgenden unterschiedlichen Schaltzuständen (V0-V7) der Schalter (S) annimmt, um den elektrischen Strom (IU, IV, IW) in Form eines Stromraumzeigers (I*) bereitzustellen, und wobei das Steuergerät (18) dazu ausgebildet ist, den Wechselrichter (10) derart anzusteuern, dass der Stromraumzeiger (I*) mit einem Phasenwinkel (alpha_I) bereitgestellt wird, der von dem Referenzphasenwinkel (alpha_R) abweicht, wobei die Abweichung (delta_I) des Phasenwinkels (alpha_I) von dem Referenzphasenwinkel (alpha_R) auf der Grundlage einer Verlustleitung (PA, PB, PC) und/oder einer Temperatur (TA, TB, TC) wenigstens eines der Schalter (S) bestimmt wird.

13. Kraftfahrzeugantriebsstrang mit wenigstens einer elektrischen Maschine (14) zum Bereitstellen von Antriebsleistung, einem Wechselrichter (10) zum Ansteuern der elektrischen Maschine (14) und mit einer Vorrichtung (18) zum Ansteuern des Wechselrichters (10) nach Anspruch 12.

**Claims**

1. Method (60) for controlling an inverter (10) by means of space vector modulation, in particular for controlling an electric machine (14), wherein the inverter (10) includes a plurality of controllable switches (S) and is designed to provide a polyphase electric current (IU, IV, IW), in particular in order to supply an electric machine (14) with electric current in a polyphase form, wherein a reference phase angle (alpha_R) is predefined, wherein the inverter (10) is controlled in such a way that a plurality of different consecutive switching states (V0 through V7) of the switches (S) is configured, in order to provide the electric current (IU, IV, IW) in the form of a current space vector (I*), and wherein the inverter (10) is controlled in such a way that the current space vector (I*) is provided having a phase angle (alpha_I) which deviates from the reference phase angle (alpha_R), wherein a deviation (delta_I) of the phase angle (alpha_I) from the reference phase angle (alpha_R) is determined as a function of a power dissipation (PA, PB, PC) and/or a temperature (TA, TB, TC) of at least one of the switches (S).

2. Method according to Claim 1, wherein the power dissipation (PA, PB, PC) and/or the temperature (TA, TB, TC) of two or three switches (S), which have the maximum losses (PA, PB, PC) and/or the maximum temperature (TA, TB, TC) of all switches (S), is/are taken into account.

3. Method according to Claim 2, wherein the deviation (delta_I) is set in such a way that the maximum losses (PA, PB, PC) of the two or the three switches (S) are essentially equal or deviate from each other at most by a predefined value (delta_T).

4. Method according to one of Claims 1 to 3, wherein the deviation (delta_I) is determined as a function of a change function (GPS, GPA) of the power dissipation, and wherein the change function (GPS, GPA) forms the change in the power dissipation of at least one switch (S) as a function of the deviation (delta_I) of the phase angle (alpha_I).

5. Method according to Claim 4, wherein the deviation (delta_I) is increased if the temperature (TA, TB, TC) of one of the switches (S) is greater than the temperature (TA, TB, TC) of the other switches (S) and a value of the change function (GPA, GPS) is less than a predefined value range (delta_GP), and wherein the deviation (delta_I) is decreased if a value of the change function (GPA, GPS) is greater than the predefined value range (delta_GP), and wherein the deviation (delta_I) is kept constant if the value of the change function (GPS, GPA) lies within the predefined value range (delta_GP).

6. Method according to Claim 4 or 5, wherein the change function (GPA, GPS) forms the change in the power dissipation of two switches (S) as a function of the deviation (delta_I) of the phase angle.

7. Method according to Claim 6, wherein the deviation (delta_I) is increased if the temperature of two of the three switches is essentially equal and the value of the change function (GPS, GPA) is less than a predefined value range (delta_GP), and wherein the deviation (delta_beta) is decreased if the value of the change function (GPA, GPS) is greater than the predefined value range (delta_GP), and wherein the deviation (delta_I) is kept constant if the value of the change function (GPA, GPS) lies within the value range (delta_GP).

8. Method according to Claim 4 or 5, wherein the change function (GPA, GPS) forms the change in the power dissipation of the switch having the highest temperature, as a function of the deviation (delta_I) of the phase angle.

9. Method according to Claim 6 or 7, wherein the the change function (GPA, GPS) forms the change in the power dissipation of two of the switches (S) having the highest temperature, as a function of the deviation (delta_I).

10. Method according to one of Claims 1 to 9, wherein the inverter (10) furthermore includes a plurality of flyback diodes (D), and wherein the deviation (delta_I) of the phase angle (alpha_I) is furthermore determined as a function of a power dissipation (PA, PB, PC) and/or a temperature (TA, TB, TC) of at least one of the flyback diodes (D).

11. Method according to one of Claims 1 to 10, wherein an electric machine (14) is controlled by means of the inverter (10), and wherein the reference phase angle (alpha_R) is determined as a function of a rotor angle (alpha_R) of the electric machine (14), in particular corresponds to the rotor angle (alpha_R).

**12.** Device (18) for controlling an inverter (10), in particular for controlling an electric machine (14), wherein the inverter (10) includes a plurality of controllable switches (S) which are connected for providing a polyphase electric current (IU, IV, IW) as a function of a reference phase angle (alpa_R), in particular in order to supply the electric machine (14) with current in a polyphase form, including a control unit (18) which is designed to control the inverter (10) in such a way that the inverter (10) assumes a plurality of consecutive different switching states (V0 through V7) of the switches (S), in order to provide the electric current (IU, IV, IW) in the form of a current space vector (I*), and wherein

the control unit (18) is designed to control the inverter (10) in such a way that the current space vector (I*) is provided having a phase angle (alpha_I) which deviates from the reference phase angle (alpha_R), wherein the deviation (delta_I) of the phase angle (alpha_I) from the reference phase angle (alpha_R) is determined based on a power dissipation (PA, PB, PC) and/or a temperature (TA, TB, TC) of at least one of the switches (S).

**13.** Motor vehicle drive train including at least one electric machine (14) for providing drive power, an inverter (10) for controlling the electric machine (14), and including a device (18) for controlling the inverter (10) according to Claim 12.

**Revendications**

**1.** Procédé d'excitation d'un onduleur (10) au moyen de la modulation du vecteur d'espace, notamment d'excitation d'une machine électrique (14), l'onduleur (10) possédant une pluralité de commutateurs (S) commandables et étant configuré pour fournir un courant électrique multiphasé (IU, IV, IW), notamment pour alimenter une machine électrique (14) en courant électrique sur plusieurs phases, un angle de phase de référence (alpha_R) étant prédéfini, l'onduleur (10) étant excité de telle sorte qu'une pluralité d'états de commutation (V0-V7) successifs différents des commutateurs (S) est établie afin de fournir le courant électrique (IU, IV, IW) sous la forme d'un vecteur d'espace de courant (I*), et

l'onduleur (10) étant excité de telle sorte que le vecteur d'espace de courant (I*) est délivré avec un angle de phase (alpha_I), lequel est différent de l'angle de phase de référence (alpha_R), un écart (delta_I) entre l'angle de phase (alpha_I) et l'angle de phase de référence (alpha_R) étant déterminé en fonction d'une puissance dissipée (PA, PB, PC) et/ou d'une température (TA, TB, TC) d'au moins l'un des commutateurs (S).

**2.** Procédé selon la revendication 1, selon lequel il est tenu compte de la puissance dissipée (PA, PB, PC) et/ou de la température (TA, TB, TC) de deux ou trois commutateurs (S) qui présentent les puissances dissipées (PA, PB, PC) maximales et/ou la température (TA, TB, TC) maximale parmi tous les commutateurs (S).

**3.** Procédé selon la revendication 2, selon lequel l'écart (delta_I) est réglé de telle sorte que les puissances dissipées (PA, PB, PC) maximales des deux ou trois commutateurs (S) sont sensiblement égales ou diffèrent mutuellement au maximum d'une valeur prédéfinie (delta_T).

**4.** Procédé selon l'une des revendications 1 à 3, selon lequel l'écart (delta_I) est déterminé en dépendance d'une fonction de modification (GPS, GPA) de la puissance dissipée, et la fonction de modification (GPS, GPA) représente la modification de la puissance dissipée d'au moins un commutateur (S) en fonction de l'écart (delta_I) de l'angle de phase (alpha_I).

**5.** Procédé selon la revendication 4, selon lequel l'écart (delta_I) est agrandi dans la mesure où la température (TA, TB, TC) de l'un des commutateurs (S) est supérieure à la température (TA, TB, TC) des autres commutateurs (S) et une valeur de la fonction de modification (GPA, GPS) est inférieure à une plage de valeurs (delta_GP) prédéfinie, et selon lequel l'écart (delta_I) est réduit dans la mesure où une valeur de la fonction de modification (GPA, GPS) est supérieure à la plage de valeurs (delta_GP) prédéfinie et selon lequel l'écart (delta_I) est maintenu constant dans la mesure où la valeur de la fonction de modification (GPS, GPA) se trouve à l'intérieur de la plage de valeurs (delta_GP) prédéfinie.

**6.** Procédé selon la revendication 4 ou 5, selon lequel la fonction de modification (GPA, GPS) représente la modification de la puissance dissipée de deux commutateurs (S) en fonction de l'écart (delta_I) de l'angle de phase.

**7.** Procédé selon la revendication 6, selon lequel l'écart (delta_I) est agrandi dans la mesure où la température de deux des trois commutateurs est sensiblement égale et la valeur de la fonction de modification (GPS, GPA) est inférieure à une plage de valeurs (delta_GP) prédéfinie, et selon lequel l'écart (delta_bêta) est réduit dans la mesure où la valeur de la fonction de modification (GPA, GPS) est supérieure à la plage de valeurs (delta_GP) prédéfinie

et selon lequel l'écart (delta_I) est maintenu constant dans la mesure où la valeur de la fonction de modification (GPA, GPS) se trouve à l'intérieur de la plage de valeurs (delta-GP) prédéfinie.

8. Procédé selon la revendication 4 ou 5, selon lequel la fonction de modification (GPA, GPS) représente la modification de la puissance dissipée du commutateur ayant la température la plus élevée en fonction de l'écart (delta_I) de l'angle de phase.

9. Procédé selon la revendication 6 ou 7, selon lequel la la fonction de modification (GPA, GPS) représente la modification de la puissance dissipée de deux des commutateurs (S) ayant la température la plus élevée en fonction de l'écart (delta_I).

10. Procédé selon l'une des revendications 1 à 9, selon lequel l'onduleur (10) possède en outre une pluralité de diodes de roue libre (D) et selon lequel l'écart (delta_I) de l'angle de phase (alpha_I) est en outre déterminé en fonction d'une puissance dissipée (PA, PB, PC) et/ou d'une température (TA, TB, TC) d'au moins l'une des diodes de roue libre (D).

11. Procédé selon l'une des revendications 1 à 10, selon lequel une machine électrique (14) est excitée au moyen de l'onduleur (10) et selon lequel l'angle de phase de référence (alpha_R) est déterminé en fonction d'un angle de rotor (alpha_R) de la machine électrique (14), notamment correspond à l'angle de rotor (alpha_R).

12. Dispositif (18) destiné à exciter un onduleur (10), notamment à exciter une machine électrique (14), l'onduleur (10) possédant une pluralité de commutateurs (S) commandables qui sont raccordés en vue de fournir un courant électrique multiphasé (IU, IV, IW) en fonction d'un angle de phase de référence (alpa_R), notamment pour alimenter la machine électrique (14) sur plusieurs phases, comprenant un contrôleur (18) qui est configuré pour exciter l'onduleur (10) de telle sorte que l'onduleur (10) adopte une pluralité d'états de commutation (V0-V7) successifs différents des commutateurs (S) afin de fournir le courant électrique (IU, IV, IW) sous la forme d'un vecteur d'espace de courant (I*), et
le contrôleur (18) étant configuré pour exciter l'onduleur (10) de telle sorte que le vecteur d'espace de courant (I*) est délivré avec un angle de phase (alpha_I), lequel est différent de l'angle de phase de référence (alpha_R), l'écart (delta_I) entre l'angle de phase (alpha_I) et l'angle de phase de référence (alpha_R) étant déterminé en fonction d'une puissance dissipée (PA, PB, PC) et/ou d'une température (TA, TB, TC) d'au moins l'un des commutateurs (S).

13. Chaîne cinématique de véhicule automobile comprenant au moins une machine électrique (14) destinée à fournir de la puissance motrice, un onduleur (10) destiné à exciter la machine électrique (14) et comprenant un dispositif (18) destiné à exciter l'onduleur (10) selon la revendication 12.

**FIG. 1**

**FIG. 2**

**FIG. 3**

FIG. 4

**FIG. 5**

**FIG. 6**

FIG. 7

EP 2 865 093 B1

**FIG. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010000548 A2
- DE 10393516 T1

- US 563819 A